# EUROPÄISCHE PATENTSCHRIFT

(11) **EP 0 679 592 B1**
(45) Veröffentlichungstag und Bekanntmachung des Hinweises auf die Patenterteilung: **03.01.1996**
(21) Anmeldenummer: 94106727.4
(22) Anmeldetag: 29.04.1994
(51) Int. Cl.: B65G 17/06, B65G 17/10

(54) **Plattenbandförderer**
Plate belt conveyor
Bande transporteuse à plaques

(43) Veröffentlichungstag der Anmeldung: 02.11.1995
(73) Patentinhaber: Howe, Michael, D-46487 Wesel-Bislich (DE); Malek, Alfons, D-47608 Geldern (DE)
(72) Erfinder: Howe, Michael, D-46487 Wesel-Bislich (DE)
(74) Vertreter: Pollmeier, Felix

(56) Entgegenhaltungen:
- DE-A- 2 113 023
- DE-C- 3 438 231
- US-A- 1 804 423
- US-A- 2 416 634
- US-A- 4 542 821
- US-A- 4 991 710

## Beschreibung

Die Erfindung bezieht sich auf einen Plattenbandförderer, dessen aus Platten mit senkrecht anschließenden Seitenwänden bestehende, sich gegenseitig überlappende Glieder an Laschenketten angeordnet sind und eine der Kettenteilung entsprechende Teilung aufweisen. Um den Verschleiß der Platten zu minimieren wird eine berührungsfreie Überlappung der Platten vorgesehen und zur Abdichtung werden die Platten in ihrem Überlappungsbereich an ihren Querkanten einerseits mit einem aus der Plattenebene aufwärts gerichteten Schenkel und andererseits mit einer den aufwärts gerichteten Schenkel der benachbarten Platte überspannenden dachförmigen Aufwölbung versehen, von der ein abwärts auf die Plattenebene zu gerichteter Schenkel ausgeht, der zusammen mit der dachförmigen Aufwölbung und dem aufwärts gerichteten Schenkel der benachbarten Platte eine Tasche und damit eine Art Labyrinthdichtung der Überlappung bildet. Die dachförmigen Aufwölbungen können beim Einsatz des Plattenbandförderers für die Steilförderung als Stauleiste dienen. Ein derartiger Plattenbandförderer ist beispielsweise bekannt aus der DE-C2-34 38 231.

Zur Verbindung der Platten mit den Ketten ist je eine der Laschen eines jeden Laschenpaares mit einem angeformten, abgewinkelten Steg versehen, dessen abgewinkelter Teil mit Löchern versehen und mittels Schrauben oder Nieten mit der zugehörigen Platte verbunden ist. Die auf den Platten aufliegenden Schrauben- oder Nietköpfe stehen in Berührung mit dem Fördergut, sind damit dem Verschleiß ausgesetzt und bilden je nach Beschaffenheit des Fördergutes Korrosionsherde. Die Verbindung der Kettenlaschen mit den Platten einerseits und die Formgebung der Platten hinsichtlich der Ausbildung der dachförmigen Aufwölbung stehen im Widerspruch und erfordern einen Kompromiß. Auch ist es erforderlich, einen Abstand der Verbindung zu den Seitenwänden der Platten einzuhalten, wodurch sich ein verhältnismäßig geringer Abstand der beiden Kettenstränge ergibt, der sich ungünstig hinsichtlich des durch das Gewicht der Ketten auf die Platten wirkenden Biegemoments - das Gewicht der Ketten liegt in der Größenordnung nahe dem Gewicht des Fördergutes - und des an der Kettenradwelle wirkenden Biegemoments auswirkt. Hinzu kommt, daß die Ketten auch in größerem Abstand von den Seitenwänden angeordnet werden, um Platz für Achsbolzenhalter zu haben, die an der Unterseite der Platten befestigt sind und die Achsbolzen der Tragrollen des Plattenbandes aufnehmen.

Aufgabe der Erfindung ist es, die vorgenannten Nachteile der Plattenbandförderer durch eine beanspruchungsgerechtere Konstruktion zu beheben.

Gelöst wird diese Aufgabe dadurch, daß bei einem Plattenbandförderer vorbeschriebener und nach dem Oberbegriff des Anspruchs 1 umrissener Bauart an den aus den Platten mit den senkrecht anschließenden Seitenwänden gebildeten Gliedern erfindungsgemäß in Verlängerung der Seitenwände mit den Seitenwänden verbundene oder von den Seitenwänden gebildete, senkrecht zu den Platten stehende Stege vorgesehen sind, mit denen die Kettenlaschen in seitlicher Anlage verbunden sind. Abgesehen davon, daß standardisierte Laschenketten verwendet werden können, von denen lediglich eine Lasche jedes Laschenpaares mit zwei Löchern (insbesondere Gewindelöchern) für die Verbindung mit den Stegen der Glieder versehen sein muß, lassen sich die Ketten am äußersten Rand der Platten auf größtmöglichem Abstand zueinander anordnen, womit die Ketten in die unmittelbare Nähe der das Plattenband stützenden Laufrollen rücken und die Glieder minimal biegebeansprucht sind. Ebenso ist die Anordnung der Kettenräder in unmittelbarer Nähe der Wellenlagerung möglich, so daß auch die Biegebeanspruchung der Kettenradwelle gering gehalten werden kann.

Zum Stand der Technik ist der Plattenbandförderer nach der US-A-4 542 821 zu erwähnen, bei welchem die Seitenwände zu den Platten zur Verbindung der Platten mit den Laschenketten mit waagerechten, gleichgerichtet zu den Platten nach außen weisenden Stegen verbunden sind, mit denen die mit abgewinkelten Stegen versehenen Kettenlaschen verbunden sind. Die nötige Abstützung der Platten und Laschenketten auf mit reibungsmindernden Auflagen versehenen Schienen beschränkt den Einsatz solcher Plattenbänder auf Sonderfälle. Eine Abstützung des Plattenbandes durch Laufrollen verbietet sich wegen der Anordnung der Laschenketten und wegen der hohen Biegebeanspruchung, der die Verbindungsstege an den Platten und Kettenlaschen dann ausgesetzt wären. Ein weiterer Nachteil besteht in der ungeschützten Anordnung der Laschenketten seitlich neben den Platten des Plattenbandes.

In weiterer Ausgestaltung können nach einem weiteren Merkmal der Erfindung zusammen mit den Kettenlaschen diesen an den Stegen zu den Seitenwänden gegenüberliegende Achsbolzenhalter mit den Stegen verbunden sein, so daß gesonderte getrennt an den Platten befestigte, die Platten örtlich stark belastende Achsen oder Achsbolzenhalter entfallen können, wobei nur so viele Achsbolzenhalter vorgesehen werden brauchen, wie der Belastung des Plattenbandes entsprechend an Tragrollen benötigt werden. Das von den Tragrollen verursachte Moment kann von den Stegen und Seitenwänden nicht nur problemlos aufgenommen werden, sondern kompensiert die vom Fördergut auf die Seitenwände ausgeübte Biegekraft und trägt so dazu bei, den Überlappungsbereich der Seitenwände dicht zu halten.

Je nach der Verwendung, insbesondere je nach dem Einsatz eines Plattenbandförderers für mehr oder weniger steil ansteigende Förderung ergibt sich eine unterschiedliche Belastung der Ketten, so daß sich zur baulichen Vereinfachung und Typisierung der Bauteile eine Ausgestaltung empfiehlt, bei der innerhalb eines bestimmten Lastbereichs Ketten unterschiedlicher Belastbarkeit, d.h. Ketten unterschiedlicher Querschnittsbemessung der Laschen mit den Gliedern verbindbar sind, zweckmäßig unter Einhaltung gleichen Abstands von der Kettenmitte zu den Platten, so daß auch baugleiche Rahmenteile verwendbar sind. Dieser Forderung kommt die erfindungsgemäße Ausbildung besonders entgegen, indem gemäß einem weiteren Merkmal der Erfindung insbesondere die Stege bis in den Bereich ausreichender Überdeckung mit den Kettenlaschen der geringsten vorkommenden Breite reichend ausgebildet sind, oder indem an den Laschenketten mit geringerer als maximal vorkommender Breite der Laschen die zur Verbindung mit den Stegen vorgesehenen Laschen mit einem die Laschen im Verbindungsbereich auf einen der maximalen Laschenbreite entsprechenden Überstand verbreitert sind.

Die Anordnung der Ketten dicht unter den Platten und ihre Verbindung mit den Platten über die Stege, durch die die Platten von Verbindungsmitteln frei bleiben, wirkt sich auch vorteilhaft für den Überlappungsbereich der Platten aus, indem nämlich die Dichtung zwischen den Platten auf kleinem Radius ausgeführt sein kann, andererseits aber auch mit einer als Stauleiste bei der Steilförderung vorteilhaften hohen Aufwölbung im Überlappungsbereich ausgeführt sein kann. Insbesondere wird die Überlappung so ausgebildet, daß der aus der Plattenebene aufwärts gerichtete Schenkel mit der dachförmigen Aufwölbung der benachbarten überlappenden Platte bei entsprechender Ausformung der Aufwölbung den über den Schwenkbereich bestehenden Dichtungsspalt bildet, während sich der abwärts gerichtete Schenkel der dachförmigen Auswölbung beim gegenseitigen Verschwenken der Platten an der Umkehre zur Öffnung der zwischen der dachförmigen Auswölbung und aufwärts gerichtetem Schenkel gebildeten Tasche von der benachbarten Platte absetzt, so daß in der Tasche sich unvermeidlich ansammelndes Fördergut bei der Verkleinerung der Tasche austreten kann.

Ausführungsbeispiele der Erfindung sind in den Zeichnungen dargestellt und anhand der Zeichnungen nachfolgend beschrieben.
- Figur 1: zeigt ein Ausführungsbeispiel eines erfindungsgemäßen Plattenbandes im Querschnitt des oberen Trums nach der in Fig. 2 eingetragenen Schnittlinie I-I und in
- Figur 2: einen Abschnitt des oberen Trums in Seitenansicht, von dem ein einzelnes Glied in
- Figur 2a: in einem Längsschnitt und in
- Figur 2b: in Aufsicht eines Ausschnitts, geschnitten nach der in Fig. 2 eingetragenen Schnittlinie b-b dargestellt ist.
- Figur 3: zeigt einen Ausschnitt der Fig. 1 in größerem Maßstab und in
- Figur 4: eine Abwandlung des Details nach Fig. 3. Die Verbindung von Gliedern des Plattenbandes mit Kettenlaschen unterschiedlicher Bemessung ist in den
- Figuren 5a und 6a: sowie den
- Figuren 5b und 6b: in Querschnitten und in den
- Figuren 5c und 6c: in Seitenansichten von Ausschnitten dargestellt.
- Figur 7: zeigt einen Plattenbandabschnitt im Längsschnitt, in
- Figur 8: in einem Ausschnitt einer Aufsicht und in
- Figur 9: in der Umkehre und in abgewandelter Ausführung in
- Figur 10: im Querschnitt, in
- Figur 11: in einem Ausschnitt einer Aufsicht und in
- Figur 12: in der Umkehre.

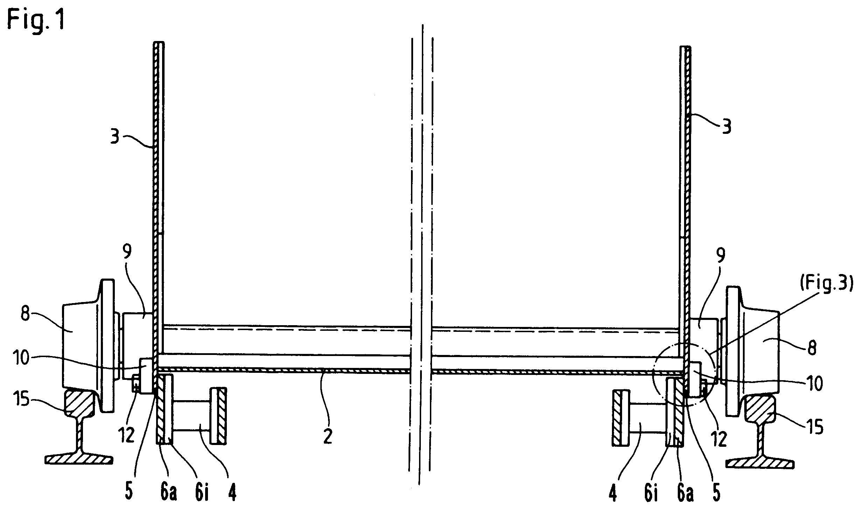

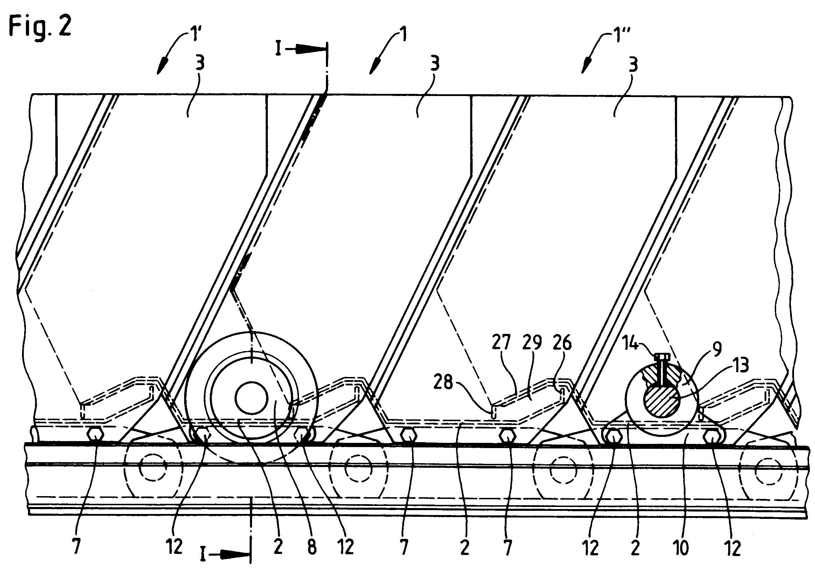

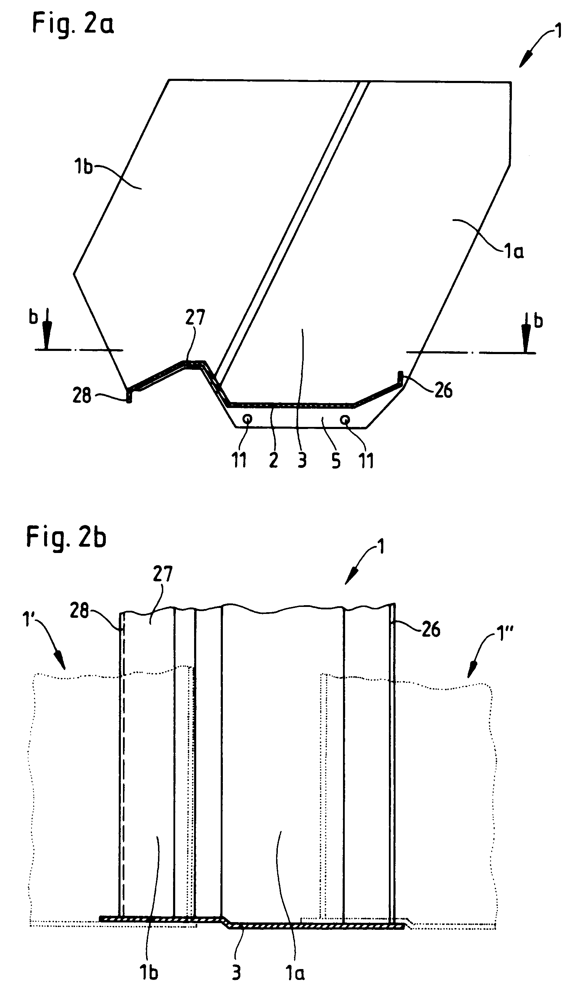

Bei einem in den Figuren 1, 2, 2a und 2b dargestellten Ausführungsbeispiel ist der Plattenbandförderer von Gliedern 1 gebildet, von denen eines in den Figuren 2a und 2b als Einzelheit dargestellt ist. Jedes Glied 1 besteht aus einer Platte 2 und senkrecht an diese anschließenden Seitenwänden 3. Jedes Glied 1 weist einen Hauptbereich 1a und einen Überlappungsbereich 1b auf. Im Überlappungsbereich 1b sind die Seitenwände 3 zur Bandmitte hin abgekröpft, so daß die Glieder 1 mit ihren Überlappungsbereichen 1b in den Hauptbereich 1a eines benachbarten Gliedes 1 eingreifen können, wie dies aus Figur 2b mit den punktiert dargestellten benachbarten Gliedern 1' und 1'' ersichtlich ist.

Verbunden sind die Glieder 1 des Plattenbandförderers durch Laschenketten 4, wobei die Glieder 1 und die Laschenketten 4 gleiche Teilung aufweisen. Zur Verbindung der Glieder 1 mit den Laschenketten 4 sind die Seitenwände 3 unterhalb der Platte 2 verlängert und bilden mit diesen Verlängerungen Stege 5, an denen Laschen 6a von außenliegenden Laschenpaaren unmittelbar bzw. Laschen 6i von innenliegenden Laschenpaaren der Laschenketten 4 über aufgelegte Distanzplatten anliegen und durch Schrauben 7 befestigt sind. Die Distanzplatten entfallen bei Verwendung von Laschenketten, deren Laschen in Längsrichtung fluchtende Mittelteile mit einerends nach innen und andererends außen abgekröpften bzw. abgesetzten, zusammenfügbare Gabelungen ergebenden Endteilen versehen sind.

Zur Abstützung des Plattenbandes sind Laufrollen 8 vorgesehen, die im ganzzahligen Vielfachen - im Ausführungsbeispiel nach den Figuren 1 und 2 dem zweifachen - der Teilung von Gliedern 1 und Laschenketten 4 mit diesen verbunden sind. Dazu sind Achsbolzenhalter 9 vorgesehen, deren Flanschplatten 10 mit zu den Löchern 11 in den Stegen 5 deckungsgleichen Löchern versehen sind und gemeinsam mit den Laschen 6a, 6i der Ketten 4, denen sie an den Stegen 5 gegenüberliegen, durch Schrauben 12 befestigt sind. Die Achsbolzen 13 der Laufrollen 8 sind in den Achsbolzenhaltern 9 auf geeignete Weise lösbar befestigt, beispielsweise durch Splinte, Keile oder - wie im rechten Teil der Figur 2 bei entfernter Laufrolle 8 dargestellt - durch eine Arretierschraube 14. Über die Laufrollen 8 stützt sich das Plattenband an Schienen 15 ab, die Teile eines nicht dargestellten Gestells sind.

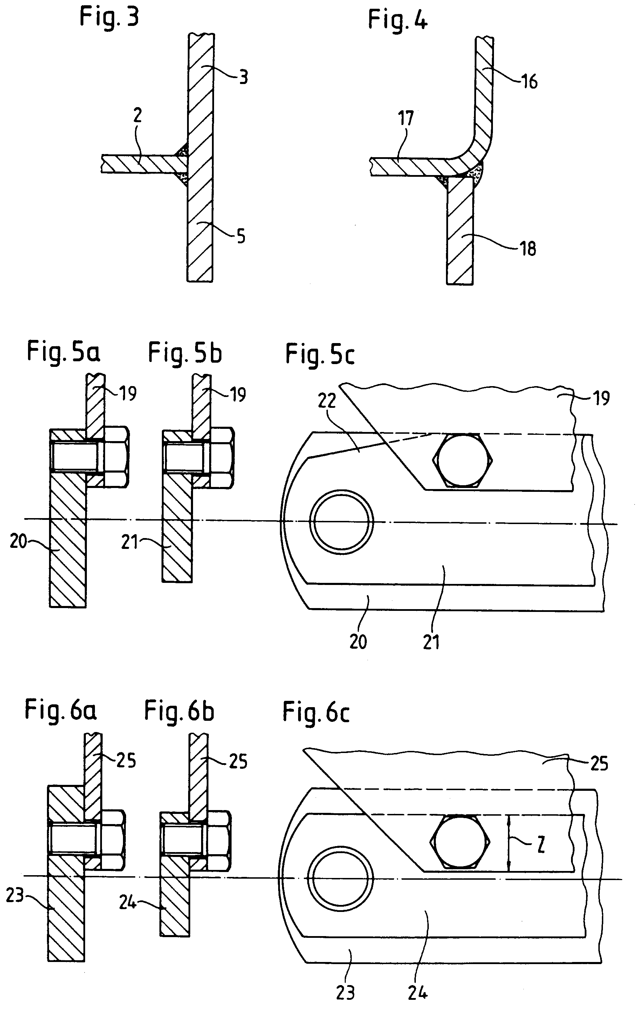

Wie der in Figur 3 dargestellte Ausschnitt der Figur 1 zeigt, ist der Steg 5 von der Seitenwand 3 selbst gebildet durch deren Verlängerung unterhalb der Platte 2. Falls die Seitenwände 16 durch Aufkantung der Platte 17 hergestellt sind, werden in Verlängerung der Seitenwände 16 Stege 18 mit den Seitenwänden 16 verbunden beispielsweise durch Schweißung, wie dies in Figur 4 dargestellt ist.

Die Verbindung der Kettenlaschen mit den Stegen in der Verlängerung der Seitenwände macht es einfach, je nach den zu erwartenden Betriebslasten in Lastbereichen Ketten unterschiedlicher Bemessung, also Belastbarkeit mit den Gliedern zu kombinieren und somit Plattenbandförderer für unterschiedliche Verhältnisse im Baukastensystem aufzubauen. Um dies zu ermöglichen ist bei dem Ausführungsbeispiel nach den Figuren 5a, 5b und 5c der Steg 19 zwar für die Verbindung mit einer breiten Kettenlasche 20 bemessen. Die schmalere Kettenlasche 21 muß mit einem Überstand 22 zu ihrer Normalbreite versehen sein. Kettenlaschen unterschiedlicher Breite können nach dem in den Figuren 6a, 6b und 6c dargestellten Ausführungsbeispiel wie die breitere Kettenlasche 23 und die schmalere Kettenlasche 24 mit einem Steg 25 verbunden sein, wenn dieser so bemessen ist, daß er auch mit der schmaleren Kettenlasche 24 eine ausreichende Überdeckung Z aufweist.

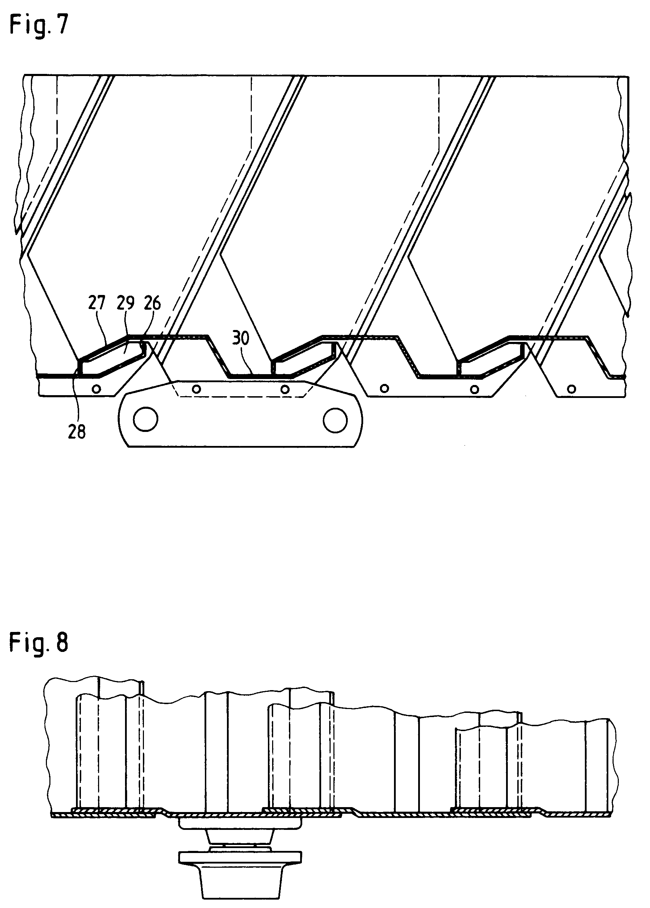

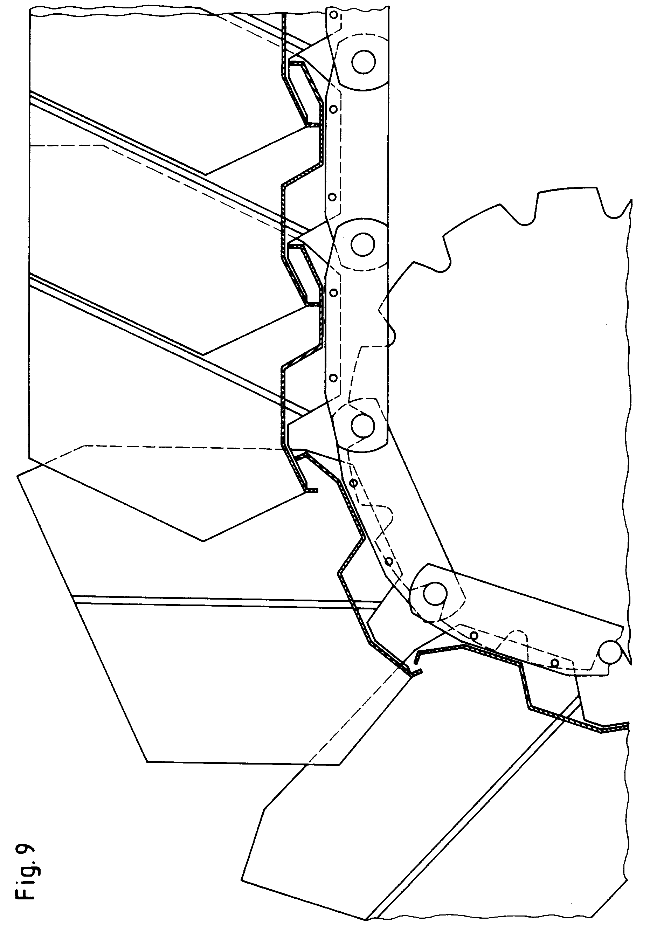

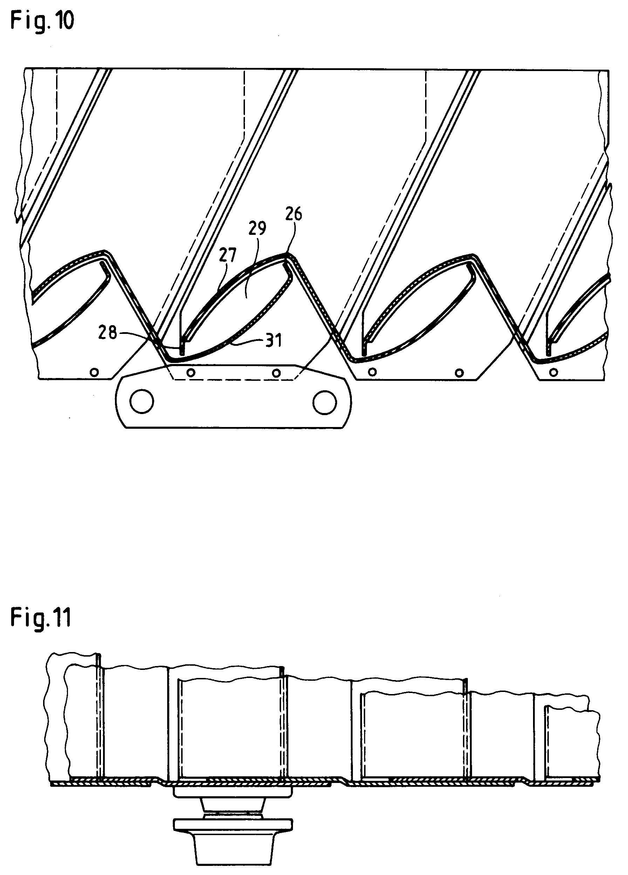

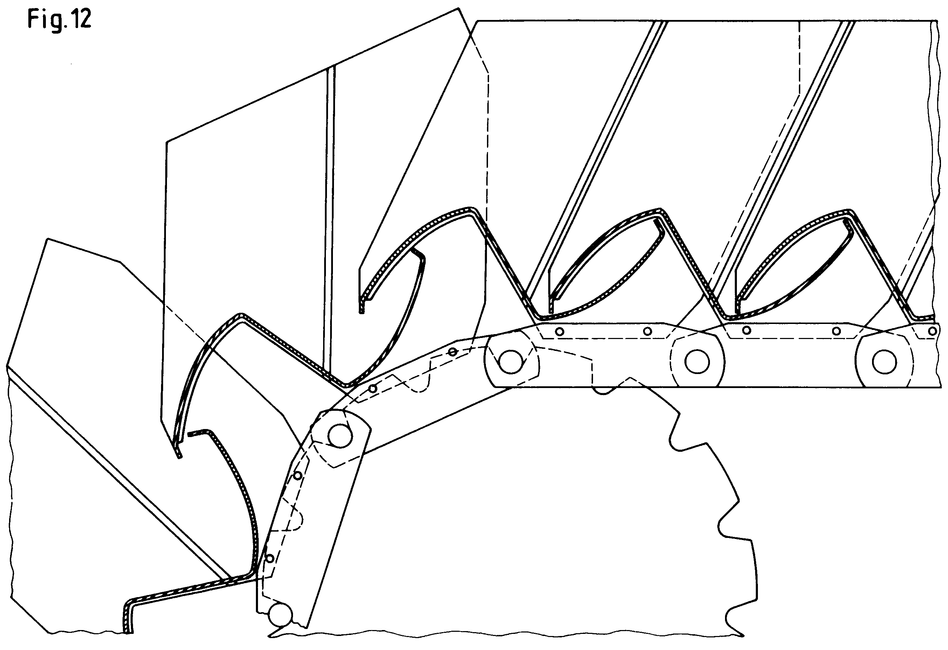

Wie die Figuren 2, 7 und 10 zeigen, sind die Platten (Platte 2 in Figur 2) so ausgebildet, daß sie sich gegenseitig überdecken, indem die Platten an ihren einen Querkanten einen aufwärts gerichteten Schenkel 26 und an ihrer anderen Querkante mit einer den Schenkel 26 der benachbarten Platte 2 überspannenden dachförmigen Aufwölbung 27 mit einem abwärts gerichteten Schenkel 28 versehen sind. Der aufwärts gerichtete Schenkel 26 bildet zusammen mit der dachförmigen Aufwölbung 27 und dem abwärts gerichteten Schenkel 28 eine Tasche 29. Der aufwärts gerichtete Schenkel 26 staut das eventuell unter dem Schenkel 28 her in die Tasche 29 einsickernde Fördergut auf und verhindert so das Nachsickern weiteren Förderguts in der Art einer Labyrinthdichtung, die sich in der Umkehre (siehe Figuren 9 und 12) öffnet, so daß eine Kompression des in der Tasche 29 angesammelten Förderguts ausgeschlossen wird. Erkennbar ist aus den Figuren 2, 7 und 10 der besondere Vorteil der Gestaltungsfreiheit für die Platten, So hat die aus der Figur 2 ersichtliche Ausbildung der Platten 2 den Vorteil, daß die Endbereiche im Querschnitt gleichförmig und daher mit einem einzigen Werkzeug ausformbar sind. Noch deutlicher ist der Vorteil bei der Ausbildung der Platten 30 in Figur 7 und der Platten 31 in Figur 10, denn die Querschnitte der Platten 30 und der Platten 31 bestehen aus gleichförmigen Hälften und benötigen nur ein einziges Werkzeug zu ihrer Ausformung.

## Patentansprüche

1. Plattenbandförderer, dessen aus Platten (2) mit senkrecht anschließenden Seitenwänden (3) bestehende, sich gegenseitig überlappende Glieder (1) an Laschenketten (4) angeordnet sind und eine der Kettenteilung entsprechende Teilung aufweisen, wobei die Platten in ihrem Überlappungsbereich an ihren Querkanten einerseits mit einem aus der Plattenebene aufwärts gerichteten Schenkel (26) und andererseits mit einer den aufwärts gerichteten Schenkel der benachbarten Platte überspannenden dachförmigen Aufwölbung (27) versehen sind, von der ein abwärts auf die Plattenebene zu gerichteter Schenkel (28) ausgeht, der zusammen mit der dachförmigen Aufwölbung und dem aufwärts gerichteten Schenkel der benachbarten Platte eine Tasche (29) bildet, die sich in der Umkehre öffnet, wobei bei gestrecktem Plattenband das untere Ende des abwärts gerichteten Schenkels (28) der darunterliegenden Platte allenfalls unter Einhaltung eines geringfügigen Abstandes dichtend gegenüberliegt,
**dadurch gekennzeichnet**,
daß in Verlängerung der Seitenwände (3) mit den Seitenwänden (3) verbundene oder von den Seitenwänden (3) gebildete, senkrecht zu den Platten (2) stehende Stege (5) vorgesehen sind, mit denen die Kettenlaschen (6a, 6i) in seitlicher Anlage verbunden sind.

2. Plattenbandförderer nach Anspruch 1,
**dadurch gekennzeichnet**,
daß zusammen mit den Kettenlaschen (6a, 6i), diesen an den Stegen (5) gegenüberliegende Achsbolzenhalter (9) mit den Stegen (5) verbunden sind.

3. Plattenbandförderer nach Anspruch 1 oder 2, dessen Glieder innerhalb eines Lastbereichs mit Laschenketten unterschiedlicher Querschnittsbemessung bei gleichem Abstand der Kettenmitte zu den Platten verbindbar sind,
**dadurch gekennzeichnet**,
daß die Stege (25) bis in den Bereich ausreichender Überdeckung (**Z**) mit den Kettenlaschen (24) der geringsten vorkommenden Breite der Laschen reichend gebildet sind.

4. Plattenbandförderer nach Anspruch 1 oder 2, dessen Glieder innerhalb eines Lastbereichs mit Laschenketten unterschiedlicher Querschnittsbemessung bei gleichem Abstand der Kettenmitte zu den Platten verbindbar sind,
**dadurch gekennzeichnet**,
daß an den Laschenketten mit geringerer als maximal vorkommender Breite der Laschen die zur Verbindung mit den Stegen (25) vorgesehenen Laschen (21) mit einem die Laschen (21) im Verbindungsbereich auf einen der maximalen Laschenbreite entsprechenden Überstand (22) verbreitert sind.

5. Plattenbandförderer nach einem der Ansprüche 1 bis 4,
**dadurch gekennzeichnet**,
daß der aus der Plattenebene aufwärts gerichtete Schenkel (26) mit der dachförmigen Aufwölbung (27) der benachbarten überlappenden Platte bei entsprechender Ausformung der Aufwölbung (27) den über den Schwenkbereich bestehenden Dichtungsspalt bilden, während sich der abwärts gerichtete Schenkel (28) der dachförmigen Auswölbung (27) beim gegenseitigen Verschwenken der Platten (2, 30, 31) an der Umkehre zur Öffnung der zwischen der dachförmigen Auswölbung (27) und aufwärts gericheteten Schenkel (26) gebildeten Tasche (29) von der benachbarten Platte absetzt.

6. Plattenbandförderer nach Anspruch 5,
**dadurch gekennzeichnet**,
daß die Platten (2, 30, 31) in ihren an die Querkanten angrenzenden Endbereichen mit dem aufwärts gerichteten Schenkel (26) einerseits und der dachförmigen Aufwölbung (27) andererseits gleichförmig ausgebildet sind.

7. Plattenbandförderer nach Anspruch 6,
**dadurch gekennzeichnet**,
daß die Platten (30, 31) von der Mitte aus bis zu den Querkanten gleichförmig ausgebildet sind.

8. Plattenbandförderer nach einem der Ansprüche 5 bis 7,
**dadurch gekennzeichnet**,
daß die dachförmige Aufwölbung (27) im Schwenkbereich dem von der Oberkante des aufwärts gericheteten Schenkels (26) beschriebenen Bogen angepaßt gerundet oder polygonal ausgebildet ist.

9. Plattenbandförderer nach einem der Ansprüche 2 bis 8,
**dadurch gekennzeichnet**,
daß der Achsbolzenhalter (9) aus einem am Steg (5) anliegenden und mit diesem verbindbaren Flansch (10) zu einem eine Bohrung zur Aufnahme des Achsbolzens (13) versehenen Auge gebildet ist.

10. Plattenbandförderer nach einem der Ansprüche 2 bis 9,
**dadurch gekennzeichnet**,
daß der mit einer Laufrolle (8) eine Montageeinheit bildende Achsbolzen (13) mit einem Sicherungsstift (Splint, Klemmschraube 14) in der Bohrung des Achsbolzenhalters (9) arretierbar ist.

## Claims

1. An apron conveyor whose elements (1) - which consist of plates (2) with perpendicularly adjacent lateral walls (3) and which overlap one another - are arranged on ladder-chains (4) and have a pitch which corresponds to the chain pitch, in the overlapping region of the plates the transverse edges of the latter being provided on the one hand with a leg (26) directed upwards from the plate plane and on the other hand with a roof-shaped arch (27) which spans the upwards-directed leg of the adjacent plate and from which there issues a leg (28) which is directed downwards towards the plate plane and which together with the roof-shaped arch and the upwards-directed leg of the adjacent plate forms a pocket (29) which opens at a return bend, the lower end of the downwards-directed leg (28) lying in a sealing manner opposite the plate located thereunder - optionally while keeping at a slight distance therefrom - when the apron conveyor is in the extended state, characterised in that in the extension of the lateral walls (3) there are provided flanges (5) which are connected to the lateral walls (3) or are formed by the lateral walls (3) and which are perpendicular to the plates (2), the chain side bars (6a, 6i) being connected to the flanges (5) with lateral contact.

2. An apron conveyor in accordance with Claim 1, characterised in that together with the chain side bars (6a, 6i), axle pin holders (9) - lying opposite the chain side bars (6a, 6i) at the flanges (5) - are connected to the flanges (5).

3. An apron conveyor in accordance with Claim 1 or 2, whose elements within a load region are connectable to ladder-chains of different cross section while the distance from the chain centre to the plates remains constant, characterised in that the flanges (25) are formed to extend as far as the region of sufficient overlap (Z) with the chain side bars (24) of the smallest occurring side-bar width.

4. An apron conveyor in accordance with Claim 1 or 2, whose elements within a load region are connectable to ladder-chains of different cross section while the distance from the chain centre to the plates remains constant, characterised in that at the ladder-chains having side bars which are less than the maximum width, the side bars (21) provided for connection to the flanges (25) [are provided] with a [projection (22) by which] the side bars (21) are enlarged in the connection region to a projection (22) corresponding to the maximum width of the side bars.

5. An apron conveyor in accordance with any one of Claims 1 to 4, characterised in that the leg (26) - which is directed upwards from the plate plane - together with the roof-shaped arch (27) of the adjacent overlapping plate form - with an appropriate shape of the arch (27) - the sealing gap present over the pivot region, while - in order to open the pocket (29) formed between the roof-shaped arch (27) and the upwards-directed leg (26) - the downwards-directed leg (28) of the roof-shaped arch (27) withdraws from the adjacent plate when the plates (2, 30, 31) pivot in relation to one another at the return bend.

6. An apron conveyor in accordance with Claim 5, characterised in that in their end regions adjacent to the transverse edges, the plates (2, 30, 31) are uniformly constructed with the upwards-directed leg (26) on the one hand and the roof-shaped arch (27) on the other hand.

7. An apron conveyor in accordance with Claim 6, characterised in that the plates (30, 31) are uniformly constructed from the centre to the transverse edges.

8. An apron conveyor in accordance with any one of Claims 5 to 7, characterised in that the roof-shaped arch (27) in the pivot region is rounded or polygonal so as to be adapted to the arc described by the upper edge of the upwards-directed leg (26).

9. An apron conveyor in accordance with any one of Claims 2 to 8, characterised in that the axle pin holder (9) is formed from a flange (10), resting on the flange (5) and connectable thereto, of an eye having a bore for receiving the axle pin (13).

10. An apron conveyor in accordance with any one of Claims 2 to 9, characterised in that the axle pin (13) forming a mounting unit together with a roller (8), can be locked in the bore of the axle pin holder (9) by means of a locking pin (split pin, clamping screw 14).

## Revendications

1. Bande transporteuse à plaques dont les maillons (1), constitués de plaques (2) avec parois latérales (3) s'y raccordant perpendiculairement, se recouvrant mutuellement, sont disposés sur des chaînes à barrettes (4) et présentent une division correspondant à la division de la chaîne, bande dans laquelle les plaques, dans leur zone de recouvrement, à leurs bords transversaux, sont munies, d'un côté, d'un rabat (26) orienté vers le haut depuis le plan de la plaque et d'autre part d'une voussure en forme de toit (27) qui franchit le rabat, orienté vers le haut, de la plaque voisine et d'où part un rabat (28) qui est orienté vers le bas en direction du plan de la plaque et qui, avec la voussure en forme de toit et le rabat, l'orienté vers le haut, de la plaque voisine, forme une poche (29) qui s'ouvre au changement de direction, et bande dans laquelle, la bande transporteuse à plaques étant en extension, l'extrémité inférieure du rabat (28) orienté vers le bas se trouve en face de la plaque située par-dessous, éventuellement en respectant une faible distance,
**caractérisée**
par le fait que, dans le prolongement des parois latérales (3), sont prévus des goussets (5) qui sont reliés aux parois latérales (3) ou sont formés par les parois latérales (3), se tiennent perpendiculairement par rapport aux plaques (2) et auxquels les barrettes (6a, 6i) des chaînes sont reliées en appui latéral.

2. Bande transporteuse à plaques selon la revendication 1,
**caractérisée**
par le fait que, de même que les barrettes de chaîne (6a, 6i), les portées d'axes (9), situées sur les goussets (5) en face de ces barrettes sont reliées aux goussets (5).

3. Bande transporteuse à plaques selon la revendication 1 ou 2, dont, à l'intérieur d'une plage de charge, les maillons peuvent être reliés à des chaînes à barrettes de différentes dimensions de section, avec une même distance entre le milieu de la chaîne et les plaques,
**caractérisée**
par le fait que les goussets (25) sont prévus s'étendant jusque dans la zone d 'un recouvrement suffisant (Z) avec les barrettes de chaîne (24) de la plus petite largeur de barrettes qui se présente.

4. Bande transporteuse a plaques selon la revendication 1 ou 2, dont, à l'intérieur d'une plage de charge, les maillons peuvent être reliés à des chaînes à barrettes de différentes dimensions de section, avec une même distance entre le milieu de la chaîne et les plaques,
**caractérisée**
par le fait que sur les chaînes à barrettes de largeur des barrettes inférieure à la largeur maximale qui se présente, les barrettes (21) prévues pour la liaison avec les goussets (25) sont élargies de façon que les barrettes (21) qui sont dans la zone de liaison présentent une surcote (22) correspondant à la largeur maximale des barrettes.

5. Bande transporteuse a plaques selon l'une des revendications 1 à 4,
**caractérisée**
par le fait que le rabat (26) orienté vers le haut, depuis le plan de la plaque, avec la voussure en forme de toit (27) de la plaque voisine qui la franchit, pour une forme appropriée de la voussure (27), forment la fente d'étanchéité existant au-dessus de la zone de pivotement, tandis que, lors du pivotement mutuel des plaques (2, 30, 31) lors du changement de direction, le rabat (28), orienté vers le bas, de la voussure en forme de toit (27) s'écarte de la plaque voisine pour permettre l'ouverture de la poche (29) formée entre la voussure en forme de toit (27) et le rabat (26) orienté vers le haut.

6. Bande transporteuse a plaques selon la revendication 5,
**caractérisée**
par le fait que, dans leurs zones d'extrémité jouxtant les bords transversaux, les plaques (2, 30, 31), avec le rabat (26) orienté vers le haut d'un côté et la voussure en forme de toit (27) de l'autre côté sont de forme identique.

7. Bande transporteuse a plaques selon la revendication 6,
**caractérisée**
par le fait que, depuis le milieu jusqu'aux bords transversaux, les plaques (30, 31) sont de forme identique.

8. Bande transporteuse à plaques selon l'une des revendications 5 à 7,
**caractérisée**
par le fait que la voussure en forme de toit (27) est de forme arrondie ou polygonale, adaptée, dans la zone de pivotement, à l'arc décrit par le bord supérieur du rabat (26) orienté vers le haut.

9. Bande transporteuse à plaques selon l'une des revendications 2 à 8,
**caractérisée**
par le fait que la portée d'axe (9) est formée d'un flasque (10) appliqué contre le gousset (5) et pouvant être relié avec celui-ci pour donner une douille présentant un alésage pour recevoir l'axe (13).

10. Bande transporteuse à plaques selon l'une des revendications 2 à 9,
**caractérisée**
par le fait que l'axe (13), formant une unité de montage avec un galet (8), peut être verrouillé dans l'alésage de la portée d'axe (9) au moyen d'une tige de sécurité (goupille fendue, vis pointeau 14).
